# EUROPÄISCHE PATENTSCHRIFT

(11) **EP 3 522 343 B1**
(45) Veröffentlichungstag und Bekanntmachung des Hinweises auf die Patenterteilung: **02.06.2021**
(21) Anmeldenummer: 18201221.1
(22) Anmeldetag: 18.10.2018
(51) Int. Cl.: B60K 1/04, H02J 7/14, B60L 7/10, B60L 7/20, H02J 7/32, G01M 17/007, B60L 50/61, B60L 53/24, B60L 53/30, B60L 58/14, B60L 53/36, B60L 53/50, B60K 25/08, H02K 7/18

(54) **MOBILE NOTLADEVORRICHTUNG FÜR EINE BATTERIE EINES KRAFTFAHRZEUGS, NOTLADEVERFAHREN FÜR EIN FAHRZEUG MIT HEBEVORRICHTUNG**
MOBILE EMERGENCY CHARGING DEVICE FOR A BATTERY OF A MOTOR VEHICLE, EMERGENCY CHARGING METHOD FOR A VEHICLE WITH LIFTING DEVICE
DISPOSITIF MOBILE DE CHARGE D'URGENCE POUR UNE BATTERIE DE VEHICULE AUTOMOBILE, PROCEDE DE CHARGE D'URGENCE POUR UN VEHICULE AVEC DISPOSITIF DE LEVAGE

(30) Priorität: 05.02.2018 DE 102018201691
(43) Veröffentlichungstag der Anmeldung: 07.08.2019
(73) Patentinhaber: AUDI AG, 85045 Ingolstadt (DE)
(72) Erfinder: Schmalzrieth, Sven, 85055 Ingolstadt (DE); Idelevitch, Vladimir, 90441 Nürnberg (DE); Ottinger, Andreas, 86641 Rain/Überacker (DE)

(56) Entgegenhaltungen:
- EP-A2- 2 800 886
- CN-U- 206 031 072
- DE-A1- 2 036 807
- DE-A1-102010 060 341
- DE-A1-102011 018 457
- DE-B3- 10 249 823
- DE-U- 9 313 440

## Beschreibung

Die Erfindung betrifft eine mobile Notladevorrichtung für eine Batterie eines Kraftfahrzeugs und ein Notladeverfahren für eine Batterie eines Kraftfahrzeugs.

Zum Notladen beziehungsweise zum generellen Aufladen einer Batterie eines Kraftfahrzeugs mit einem Elektro- oder Hybridantrieb existieren bereits verschiedene Vorrichtungen und Verfahren.

In der DE 10 2016 008 028 A1 wird beispielsweise ein mobiles Ladesystem zum Aufladen einer elektrischen Energiespeichereinheit eines Kraftfahrzeugs beschrieben. Hierbei wird mit einem mobilen mit Kraftstoff betreibbaren Verbrennungsmotor eine Generatoreinrichtung angetrieben, die Strom zum Versorgen der Energiespeichereinheit bereitstellt.

Es sind zudem verschiedene Verfahren und Vorrichtungen bekannt, bei denen zum Laden einer Batterie eines Kraftfahrzeugs ausgenutzt wird, dass in einem Rekuperationsmodus einer elektrischen Antriebseinheit eines Kraftfahrzeugs kinetische Energie in elektrische Energie umgewandelt werden kann, wodurch die Batterie des Kraftfahrzeugs aufgeladen werden kann. Eine solche Energierückgewinnung erfolgt üblicherweise während des Fahrbetriebs, beispielsweise während einer Bremsung oder im Schubbetrieb des Kraftfahrzeugs. Es ist jedoch auch möglich, während das Kraftfahrzeug im Stillstand steht, durch ein externes Antreiben zumindest eines der Räder des Kraftfahrzeugs die Batterie im Rekuperationsbetrieb des Kraftfahrzeugs aufzuladen. Basierend auf diesem Prinzip wird zum Beispiel in der DE 10 2010 060 341 A1 ein Rollenprüfstand beschrieben, der antreibbare Rollen in den Boden des Rollenprüfstands eingelassen hat und mit diesen Rollen zum Laden eines elektrischen Energiespeichers in einem Kraftfahrzeug ein Rad des Kraftfahrzeugs in Bewegung versetzt. Dieser Rollenprüfstand stellt somit eine Ladevorrichtung für eine Energiespeichereinheit eines Elektro- oder Hybridfahrzeugs dar.

In der DE 10 2011 018 457 A1 wird zudem eine Ladestation beschrieben, bei der ebenfalls eine von einer elektrischen Maschine angetriebene und in den Boden einer stationären Ladestation eingelassene Rolle mit der Lauffläche von mindestens einem Rad eines Kraftfahrzeugs in Kontakt gebracht wird, um die Batterie dieses Kraftfahrzeugs in einem Rekuperationsmodus des Kraftfahrzeugs aufzuladen. Die Antriebsvorrichtung dieser Rolle wird hierbei mit Energie aus einer Stromversorgung und/oder hydraulisch beziehungsweise pneumatisch betriebenen Einrichtung versorgt.

In der US 8,174,231 B2 wird ein Aufladeverfahren für ein Kraftfahrzeug beschrieben, bei dem ebenfalls das Rad eines stationären Kraftfahrzeugs durch eine rotierende Rolle bewegt wird, um in einem Rekuperationsmodus die Batterie des Kraftfahrzeugs aufzuladen. Die Rolle wird hierbei dadurch bewegt, dass ein weiteres Kraftfahrzeug mit seinen Rädern die Rolle in Bewegung versetzt.

In der CN 206 031 072 U ist eine Notladevorrichtung für ein Leihfahrrad gezeigt, mithilfe derer eine Batterie eines elektronischen Ausleihsystems des Leihfahrrads aufgeladen werden kann. Das Aufladen der Batterie erfolgt immer dann, wenn ein Rad des Leihfahrrads mithilfe von Antriebsrädern der Notladevorrichtung in Bewegung versetzt wird.

Es ist die Aufgabe der Erfindung, eine Lösung bereitzustellen, mittels welcher die Batterie eines Kraftfahrzeugs möglichst jederzeit aufgeladen werden kann.

Diese Aufgabe wird durch eine mobile Notladevorrichtung und ein Notladeverfahren für eine Batterie eines Kraftfahrzeugs gelöst.

Die erfindungsgemäße mobile Notladevorrichtung für eine Batterie eines Kraftfahrzeugs, welches dazu ausgelegt ist, die Batterie in einem Rekuperationsbetrieb aufzuladen, ist dadurch gekennzeichnet, dass die mobile Notladevorrichtung zumindest ein Kraftstoffreservoir, einen Verbrennungsmotor sowie wenigstens eine Antriebsrolle zum Antreiben eines Rades des Kraftfahrzeugs aufweist. Die die wenigstens eine Antriebsrolle ist zumindest mittelbar mit einer Ausgangswelle des Verbrennungsmotors verbunden und wird über diese Verbindung bei laufendem Verbrennungsmotor in eine Rotationsbewegung versetzt. Die Antriebsrolle ist derart unterhalb von einem der Räder des Kraftfahrzeugs positionierbar, dass mittels der rotierenden Antriebsrolle bei laufendem Verbrennungsmotor der mobilen Notladevorrichtung das betreffende Rad in eine Drehbewegung versetzt und dadurch die Batterie im Rekuperationsbetrieb des Kraftfahrzeugs aufgeladen wird.

Die Erfindung betrifft somit ein tragbares Gerät zum Laden einer Kraftfahrzeugbatterie, wobei das Gerät dazu gedacht ist, insbesondere in einem Notfall, das heißt im Fall einer relativ stark entladenen Batterie, eingesetzt zu werden. Diese Notladevorrichtung ist für ein Kraftfahrzeug geeignet, das über einen Modus verfügt, in dem zumindest durch Bewegung eines der Räder des Kraftfahrzeugs die kinetische Energie dieser Radbewegung in elektrische Energie umgewandelt und zum Aufladen der Batterie des Kraftfahrzeugs verwendet werden kann. Die Notladevorrichtung ist also für ein Kraftfahrzeug ausgelegt, das über einen Rekuperationsmodus verfügt.

Die mobile Notladevorrichtung weist wenigstens einen Speicher für Kraftstoff, einen mit diesem Kraftstoff antreibbaren Motor sowie eine zylinderförmige drehbare Komponente, die sogenannte Antriebsrolle, auf. Mit dieser Antriebsrolle kann mindestens eines der Räder des Kraftfahrzeugs, falls diese Antriebsrolle unterhalb dieses Rades positioniert wurde, angetrieben, das heißt in Bewegung versetzt, werden. Die Antriebsrolle selbst wird durch eine Bewegung des Verbrennungsmotors angetrieben, und zwar über eine Zwischenkomponente, die Ausgangswelle des Motors, deren Rotationsbewegung indirekt auf die Antriebsrolle übertragen wird, beispielsweise mithilfe eines zwischen Ausgangswelle und Antriebsrolle geschalteten Getriebes.

Befindet sich nun die Antriebsrolle unterhalb eines der Räder des Kraftfahrzeugs und wird der Verbrennungsmotor angeschaltet, wird durch die Drehbewegung der Antriebsrolle das entsprechende Rad ebenfalls in eine Drehbewegung versetzt und dadurch letztendlich unter Verwendung des Rekuperationsmodus des Kraftfahrzeugs die Batterie des Kraftfahrzeugs mit elektrischer Energie geladen. Die mobile Notladevorrichtung nutzt somit die bereits im Kraftfahrzeug vorhandenen Einrichtungen und Systeme zum Erzeugen von Energie zum Laden der Batterie. Dies ist möglich, da die entsprechenden Einrichtungen und Systeme im Kraftfahrzeug bereits über Zwischenspeicher, Wechselrichter als auch Zuleitungen verfügen.

Befindet sich beispielsweise ein Elektro- oder Hybridfahrzeug in der Situation, dass die Batterie des Fahrzeugs fast entladen ist und zudem im Falle des Hybridfahrzeugs ein Kraftstoffreservoir für einen Verbrennungsmotor des Fahrzeugs leer ist, kann die mobile Notladevorrichtung dazu genutzt werden, die Batterie des Kraftfahrzeugs wieder zumindest teilweise aufzuladen. Hierfür wird das Kraftfahrzeug in eine Art Notfalllademodus geschalten und die Notladevorrichtung unter einem der angetriebenen Räder einer Achse des Kraftfahrzeugs positioniert. Diese Positionierung erfolgt manuell durch einen Benutzer des Kraftfahrzeugs. Der Notfalllademodus des Kraftfahrzeugs umfasst, dass bei einer Bewegung zumindest eines der Räder des Kraftfahrzeugs die Batterie im Rekuperationsbetrieb des Kraftfahrzeugs aufgeladen werden kann. Die unter dem Rad des Kraftfahrzeugs positionierte Notladevorrichtung weist ein Kraftstoffreservoir, das zum Beispiel mit 1 bis 2 Litern Ethanol oder Benzin gefüllt ist, sowie einen Verbrennungsmotor, wie beispielsweise einen Zweitaktmotor, auf. Mithilfe dieses Motors wird dann bei Inbetriebnahme der mobilen Notladevorrichtung eine Antriebsrolle derart in Bewegung versetzt, dass diese, falls ein Rad des Kraftfahrzeugs so oberhalb der Antriebsrolle positioniert wird, dass sich die Antriebsrolle und das Rad des Kraftfahrzeugs berühren, das Rad des Kraftfahrzeugs in Bewegung versetzt wird. Je nach Größe des Kraftstoffreservoirs und je nach Motorleistung wird daraufhin innerhalb eines Zeitraums von üblicherweise um die 30 Minuten die Batterie des Kraftfahrzeugs im Rekuperationsbetrieb mit ausreichend elektrischer Energie aufgeladen, sodass das Kraftfahrzeug üblicherweise weitere 30 bis 50 Kilometer fahren kann. Mithilfe der mobilen Notladevorrichtung kann die Batterie des Kraftfahrzeugs also ausreichend aufgeladen werden, damit sich das Kraftfahrzeug selbständig zur nächstliegenden stationären Ladevorrichtung für Elektro- oder Hybridfahrzeugen bewegen kann.

Mit der erfindungsgemäß vorgeschlagenen mobilen Notladevorrichtung für eine Batterie eines Kraftfahrzeugs kann somit unter Verwendung des Rekuperationsbetriebs eines Kraftfahrzeugs die Batterie des Kraftfahrzeugs mit ausreichend Energie versorgt werden, um die Reichweite des Kraftfahrzeugs derart zu vergrößern, dass das Kraftfahrzeug sich zu einer Ladestation beziehungsweise im Falle eines Hybridfahrzeugs bis zu einer Kraftstofftankstelle weiter bewegen kann. Die mobile Ladevorrichtung kann derart proportioniert sein, dass sie zusammen mit einem Ersatzrad des Kraftfahrzeugs in der Reserveradmulde des Kraftfahrzeugs verstaut werden kann, wenn sie nicht benötigt wird. Die Notladevorrichtung kann somit mit besonders geringem Aufwand bei jeder Fahrt des Kraftfahrzeugs mitgeführt werden.

Erfindungsgemäß ist es zudem vorgesehen, dass die mobile Notladevorrichtung eine drehbar gelagerte Lagerungsrolle aufweist, wobei jeweilige Rotationsachsen der Lagerungsrolle und der Antriebsrolle parallel zueinander verlaufen, sodass das betreffende Rad des Kraftfahrzeugs im Rekuperationsbetrieb teilweise zwischen der Antriebsrolle und der Lagerungsrolle angeordnet an diesen abrollt. Die mobile Notladevorrichtung weist somit insgesamt zwei drehbar gelagerte Rollen auf. Diese Rollen werden als Antriebsrolle und als Lagerungsrolle bezeichnet und derart relativ zueinander angeordnet, dass ihre Längsachsen parallel zueinander liegen. Ein Rad des Kraftfahrzeugs kann nun derart zwischen den beiden Rollen positioniert werden, dass die beiden Rollen das Rad einspannen und somit das Kraftfahrzeug über der mobilen Notladevorrichtung stabilisieren. Das Rad des Kraftfahrzeugs wird also über die durch den laufenden Verbrennungsmotor in Rotation versetzte Antriebsrolle in Bewegung versetzt. Diese Rotationsbewegung des Rades wird wiederum auf die Lagerungsrolle übertragen, sodass letztendlich beide Rollen in Bewegung sind. Mithilfe der beiden Rollen der Notladevorrichtung kann somit das Rad des Kraftfahrzeugs besonders stabil und sicher über der mobilen Notladevorrichtung fixiert werden, während durch die Drehbewegung des Rades im Rekuperationsbetrieb die Batterie aufgeladen wird.

In vorteilhafter Ausgestaltung der Erfindung ist es vorgesehen, dass ein Abstand zwischen den Rotationsachsen für unterschiedliche Raddurchmesser veränderbar ist. Die Distanz zwischen der Antriebsrolle und der Lagerungsrolle kann somit abhängig von einem Durchmesser eines Rades des Kraftfahrzeugs eingestellt werden. Weist die mobile Notladevorrichtung zum Beispiel ein Gehäuse auf, das mindestens zwei parallel zueinander angeordnete Außenwände aufweist, kann die Antriebsrolle fest an einer Stelle zwischen diesen beiden Gehäusewänden justiert werden. Die Gehäusewände weisen zudem mehrere in fest definierten Abständen angebrachte Arretierungspunkte für die Lagerungsrolle auf. Diese Arretierungspunkte sind in solchen Abständen zur Antriebsrolle gewählt, dass letztendlich der Abstand zwischen den beiden Rollen auf die Durchmesser handelsüblicher Kraftfahrzeugräder abgestimmt ist. Es ist somit möglich, die Lagerungsrolle so innerhalb des Gehäuses der mobilen Notladevorrichtung zu justieren, dass Räder verschiedener Durchmesser stabil und sicher über der Notladevorrichtung positioniert werden können. Als Arretierungspunkte sind beispielsweise Aussparungen in den Gehäusewänden möglich, in die aus den beiden Enden der Lagerungsrolle hervorragende Stifte geklemmt werden können. Die mobile Notladevorrichtung kann somit für Kraftfahrzeuge mit verschiedener Bereifung verwendet und der jeweiligen Bereifung der Räder des Kraftfahrzeugs vor Ort und mit relativ geringem Aufwand angepasst werden.

Erfindungsgemäß ist es vorgesehen, dass der Verbrennungsmotor und das Kraftstoffreservoir in die Antriebsrolle integriert sind. Es ist somit vorgesehen, dass sich sowohl das Kraftstoffreservoir als auch der Verbrennungsmotor direkt an beziehungsweise innerhalb der Rolle und somit nicht zugänglich für den Benutzer des Kraftfahrzeugs angeordnet sind. Diese beiden Bestandteile der Notladevorrichtung können sich beispielsweise an einem der Enden der Antriebsrolle und direkt am Gehäuse der Notladevorrichtung befestigt befinden. Diese Anordnung des Verbrennungsmotors und des Kraftstoffreservoirs innerhalb beziehungsweise direkt an der Antriebsrolle ermöglichen eine besonders sichere Handhabung der Notladevorrichtung durch die Benutzern des Kraftfahrzeugs, da weder der Verbrennungsmotor noch das Kraftstoffreservoir direkt für die Benutzer zugänglich angeordnet sind.

In weiterer vorteilhafter Ausgestaltung der Erfindung ist es vorgesehen, dass das Kraftstoffreservoir austauschbar ist. Das Kraftstoffreservoir, das heißt der Speicher für den Kraftstoff für den Motor der Notladevorrichtung, kann somit entnommen und wieder eingesetzt werden. Dies ermöglicht, dass entweder ein Kraftstoffreservoir, das entnommen wurde, durch ein neues Kraftstoffreservoir ersetzt wird, oder dass das entnommene Kraftstoffreservoir erneut aufgefüllt werden kann. Alternativ dazu ist es möglich, dass ein Kraftstoffreservoir verwendet wird, das nur für eine Einwegnutzung vorgesehen ist und somit nicht austauschbar ist. Dies würde bedeuten, dass die mobile Notladevorrichtung nur einmal verwendet werden kann. Ein austauschbares Kraftstoffreservoir hat den Vorteil, dass damit die mobile Notladevorrichtung mehrmals verwendet werden kann, um die Batterie des Kraftfahrzeugs in einer Notsituation, das heißt bei fast entladener Batterie, im Rekuperationsbetrieb des Kraftfahrzeugs wieder aufzuladen.

In weiterer vorteilhafter Ausgestaltung der Erfindung ist es vorgesehen, dass zwischen der Antriebsrolle und der Ausgangswelle des Verbrennungsmotors ein Getriebe zwischengeschaltet ist. Die Antriebsrolle und die Ausgangswelle des Verbrennungsmotors sind somit nicht in direktem Kontakt miteinander. Das Getriebe zwischen der Antriebsrolle und der Ausgangswelle des Verbrennungsmotors kann hierbei mehrere Getriebestufen aufweisen. Die Ausgangswelle des Verbrennungsmotors kann beispielsweise ein erstes Rad des Getriebes antreiben, das wiederum über weitere Getriebestufen die nach innen verzahnte Innenwand der Antriebsrolle in Bewegung versetzt. Bei dem Getriebe kann es sich generell um ein Wellengetriebe oder um ein direkt verzahntes Getriebe handeln.

Es ist durch das Zwischenschalten eines Getriebes möglich, dass die Drehbewegung des Verbrennungsmotors, die üblicherweise bei 5000 bis 8000 Umdrehungen pro Minute liegt, durch ein entsprechendes Getriebe mit üblicherweise ein bis sechs Getriebestufen zu einer Drehbewegung der Antriebsrolle führt, die zu einer Drehbewegung des Rades des Kraftfahrzeugs von etwa zwei bis drei Umdrehungen pro Sekunde führt. Mithilfe des Getriebes ist somit eine besonders sinnvolle Übersetzung der Bewegung des Verbrennungsmotors zur Bewegung der Antriebsrolle und somit letztendlich zur Bewegung des Rades des Kraftfahrzeugs zur Ladung der Batterie des Kraftfahrzeugs im Rekuperationsbetrieb möglich.

Erfindungsgemäß ist zudem ein Notladeverfahren für eine Batterie eines Kraftfahrzeugs mittels einer mobilen Notladevorrichtung, wie sie oben beschrieben wurde, vorgesehen, bei welchem eine Antriebsrolle der Notladevorrichtung unterhalb von einem der Räder des Kraftfahrzeugs positioniert, bei laufendem Verbrennungsmotor der mobilen Notladevorrichtung mittels der rotierenden Antriebsrolle das betreffende Rad in eine Drehbewegung versetzt und dadurch die Batterie im Rekuperationsbetrieb des Kraftfahrzeugs aufgeladen wird. Im Rahmen dieses Notladeverfahrens für eine Kraftfahrzeugbatterie wird also eine drehbar gelagerte Komponente der oben beschriebenen Notladevorrichtung, das heißt dessen Antriebsrolle, so unterhalb eines der Räder des Kraftfahrzeugs angeordnet, dass, sobald der Verbrennungsmotor der mobilen Notladevorrichtung angeschaltet wird, durch die Drehbewegung der Antriebsrolle das betreffende Rad ebenfalls in eine Drehbewegung versetzt wird, wodurch die Batterie des Kraftfahrzeugs im Rekuperationsbetrieb des Kraftfahrzeugs geladen wird. Mithilfe dieses Notladeverfahrens kann somit die Restreichweite eines Elektro- oder Hybridfahrzeugs unter Verwendung der oben beschriebenen mobilen Notladevorrichtung für eine Batterie eines Kraftfahrzeugs vergrößert werden.

In weiterer vorteilhafter Ausgestaltung der Erfindung ist es vorgesehen, dass im Rahmen des Notladeverfahrens eine Steuereinheit des Kraftfahrzeugs, wenn ein Ladezustand der Batterie eine untere Ladegrenze unterschritten hat, einen Benutzer des Kraftfahrzeugs mit einem vorbestimmten Warnsignal dazu auffordert, die mobile Notladevorrichtung zu positionieren. Mittels einer dafür vorgesehenen Komponente des Kraftfahrzeugs wird also der Ladezustand der Batterie erfasst. Sobald von dieser Komponente ein vorbestimmter unterer Grenzwert der Batterieladung festgestellt wird, übermittelt diese an einen Benutzer des Kraftfahrzeugs ein entsprechendes Signal. Mit diesem Signal wird der Benutzer darauf aufmerksam gemacht, dass es aufgrund des Ladezustands der Batterie sinnvoll wäre, die mobile Notladevorrichtung zu verwenden, das heißt diese unter einem Rad des Kraftfahrzeugs zu positionieren. Diese Steuereinheit, das heißt die Komponente die dazu ausgelegt ist, dieses Warnsignal zu übermitteln und den Benutzer zur Positionierung der Notladevorrichtung aufzufordern, kann ein Bestandteil der Batterie des Kraftfahrzeugs sein. Dies hat zum Vorteil, dass das Notladeverfahren in diesem Fall fahrzeugunabhängig durchgeführt werden kann und somit nicht auf andere Systeme des Kraftfahrzeugs zugreifen muss. Es ist jedoch auch möglich, dass die Steuereinheit nicht direkt in die Batterie integriert ist. In diesem Fall ist die Funktion der Steuereinheit nicht von einem Ladezustand der Batterie abhängig, was insbesondere bei einer fast vollständig entladenen Batterie in einer Notfallsituation besonders vorteilhaft ist.

Bei dem Warnsignal kann es sich beispielsweise um eine Warnleuchte im Bereich des Fahrercockpits des Kraftfahrzeugs handeln. Dieses Warnsignal kann mit einer optischen Anzeige auf einem Display im Fahrzeuginneren verbunden sein, auf dem mit einer Symbol- oder Textbenachrichtigung der Benutzer des Kraftfahrzeugs darauf hingewiesen wird, dass er die Notladevorrichtung unterhalb eines der Räder des Kraftfahrzeugs positionieren soll. Auf diesem Display kann zudem eine Anleitung zum Ort des Anhaltens sowie zum Positionieren der Notladevorrichtung angezeigt werden. Die Anzeige kann zudem Informationen darüber enthalten, welches Rad des Kraftfahrzeugs besonders vorteilhaft für das Notladeverfahren mit der mobilen Notladevorrichtung geeignet ist. Für die Bestimmung dieses Rades des Kraftfahrzeugs können zum Beispiel Umgebungsdaten von entsprechenden Sensoreinrichtungen des Kraftfahrzeugs berücksichtigt werden, denen Informationen über die Untergrundbeschaffenheiten im Bereich der aktuellen Position des Kraftfahrzeugs zur Verfügung stehen. Alternativ oder zusätzlich zu einem optischen Warnsignal kann auch ein akustisches Warnsignal im Rahmen des Notladeverfahrens verwendet werden. Ein Benutzer des Kraftfahrzeugs enthält also detaillierte und leicht verständliche Angaben dazu, wann und wie er die Notladevorrichtung im Fall eines Notfalls positionieren soll.

In weiterer vorteilhafter Ausgestaltung des erfindungsgemäß vorgeschlagenen Notladeverfahrens ist es vorgesehen, dass ein aktives Fahrwerk des Kraftfahrzeugs das betreffende Rad so weit anhebt, dass die Notladevorrichtung unter dem Rad positionierbar ist, wobei das aktive Fahrwerksystem nach der Positionierung der Notladevorrichtung das betreffende Rad auf die Antriebsrolle der Notladevorrichtung absenkt. Um die mobile Notladevorrichtung unter einem Rad des Kraftfahrzeugs zu positionieren, ist es also möglich, dass das entsprechende Rad mithilfe einer Komponente des Kraftfahrzeugs vom Boden angehoben wird. Nachdem das Rad vom Boden angehoben wurde und von dem Benutzer des Kraftfahrzeugs die Notladevorrichtung unterhalb des Rades positioniert wurde, wird mit dieser Komponente des Kraftfahrzeugs das Kraftfahrzeug derart wieder heruntergelassen, dass das Rad unmittelbar oberhalb der Antriebsrolle der Notladevorrichtung positioniert ist. Das Hochheben sowie das Absenken des Rades beziehungsweise des Kraftfahrzeugs im Bereich des ausgewählten Rades wird somit von einem aktiven Fahrwerksystem, das heißt von einer entsprechenden Komponente des Kraftfahrzeugs durchgeführt. Verfügt das Kraftfahrzeug also über ein solches aktives Fahrwerksystem, muss der Benutzer des Kraftfahrzeugs lediglich die mobile Notladevorrichtung aus ihrem Aufbewahrungsort innerhalb des Kraftfahrzeugs hervorholen und auf dem Boden unterhalb des betreffenden Rades des Kraftfahrzeugs ablegen. Mithilfe eines aktiven Fahrwerksystems des Kraftfahrzeugs ist daher eine besonders vorteilhafte und mit relativ geringem Aufwand durchzuführende Positionierung der mobilen Notladevorrichtung unterhalb von einem Rad des Kraftfahrzeugs möglich.

Alternativ dazu ist es möglich, dass der Benutzer des Kraftfahrzeugs das Kraftfahrzeug im Bereich des betreffenden Rades selbst anhebt und auf der von ihm positionierten Notladevorrichtung ablässt, zum Beispiel mithilfe eines Wagenhebers. Es ist zudem möglich, dass der Benutzer des Kraftfahrzeugs zunächst die mobile Notladevorrichtung auf dem Boden in der Nähe von einem der Räder des Kraftfahrzeugs positioniert und daraufhin das Kraftfahrzeug auf die mobile Ladevorrichtung fährt. Dieses Fahren auf die Notladevorrichtung, beziehungsweise genau genommen auf die Antriebsrollen der Notladevorrichtung, kann durch einen manuellen Fahrvorgang des Benutzers erfolgen oder durch Aktivierung einer zumindest teilautomatischen Fahrerassistenzfunktion.

Bei der Durchführung des erfindungsgemäßen Verfahrens kann ein Fahrzeug mit einer Batterie Verwendung finden, welches dazu ausgelegt ist, die Batterie in einem Rekuperationsbetrieb aufzuladen, wobei das Kraftfahrzeug einen Hebemechanismus aufweist, welcher dazu ausgelegt ist, einen Abstand zwischen zumindest einem Rad des Kraftfahrzeugs und einem Untergrund so weit zu vergrößern, dass die Notladevorrichtung zwischen dem Rad und dem Untergrund positionierbar ist. Das Kraftfahrzeug mit Batterie verfügt somit über einen Rekuperationsmodus, der dazu verwendet werden kann, dass durch eine Bewegung zumindest eines Rades des Kraftfahrzeugs die kinetische Energie dieser Radbewegung in elektrische Energie umgewandelt wird und zum Aufladen der Batterie des Kraftfahrzeugs verwendet wird. Zudem ist das Kraftfahrzeug dazu in der Lage, zumindest eines seiner vier Räder so weit anzuheben, dass zwischen diesem Rad und dem Boden unterhalb des Kraftfahrzeugs die oben beschriebene Notladevorrichtung für eine Batterie eines Kraftfahrzeugs positionierbar ist. Bei diesem Hebemechanismus des Kraftfahrzeugs kann es sich zum Beispiel um das oben genannte aktive Fahrwerksystem eines Kraftfahrzeugs handeln.

Es ist jedoch ebenfalls möglich, dass das Kraftfahrzeug einen integrierten Wagenheber aufweist, der beispielsweise an der Unterseite des Kraftfahrzeugs befestigt ist und in dieser Situation oder beispielsweise zum Wechseln eines Reifens mithilfe einer dafür ausgelegten Steuereinheit des Kraftfahrzeugs ausgefahren werden kann und das Kraftfahrzeug im Bereich zumindest eines der Räder des Kraftfahrzeugs so weit vom Boden anheben kann, dass die mobile Notladevorrichtung zwischen Rad und Boden positioniert werden kann. Durch einen im Kraftfahrzeug eingebauten Hebemechanismus kann die mobile Notladevorrichtung in einer Notfallsituation besonders vorteilhaft und mit geringem Aufwand positioniert werden.

Die nachstehenden Figuren erleichtern das Verständnis des durch die Ansprüche definierten Schutzumfanges.

Hierzu zeigt:
- Fig. 1: eine schematische Darstellung eines Kraftfahrzeugs mit einer Batterie, welche mithilfe einer mobilen Notladevorrichtung in einem Rekuperationsbetrieb aufgeladen wird;
- Fig. 2: eine schematische Darstellung der mobilen Notladevorrichtung;
- Fig. 3: eine schematische Darstellung der mobilen Notladevorrichtung, über der ein Rad des Kraftfahrzeugs positioniert ist.

Bei den im Folgenden erläuterten Ausführungsbeispielen handelt es sich um bevorzugte Ausführungsformen der Erfindung. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

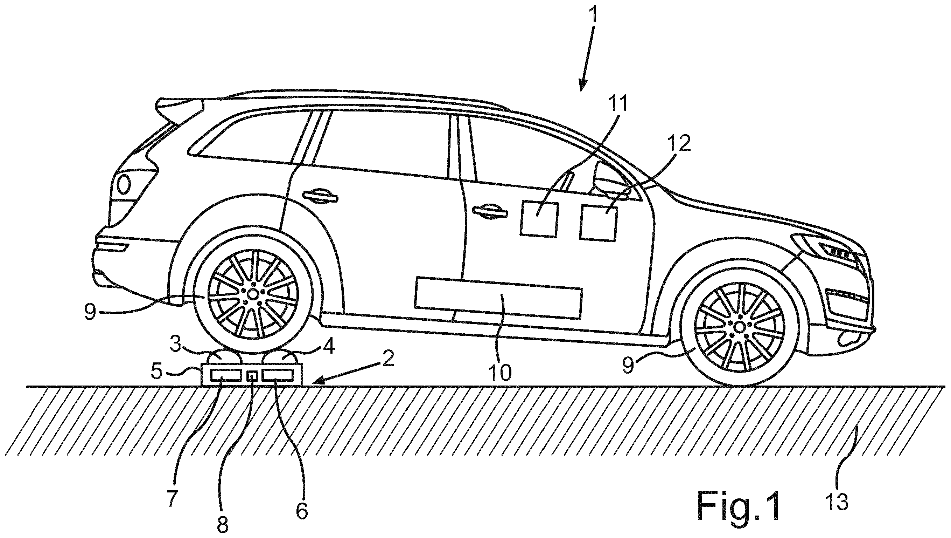

In Fig. 1 ist ein Kraftfahrzeug 1 skizziert, das eine Batterie 10 aufweist. Bei dem Kraftfahrzeug 1 handelt es sich somit um ein Elektrofahrzeug oder um ein Hybridfahrzeug. Während einer Fahrt des Kraftfahrzeugs 1 stellt eine Batteriesteuereinheit 11 des Kraftfahrzeugs 1 fest, dass der aktuelle Ladezustand der Batterie 10 eine untere Ladegrenze unterschritten hat. Daraufhin wird einem Benutzer des Kraftfahrzeugs 1 auf einer Anzeigeeinheit 12 im Fahrzeuginneren ein vorbestimmtes Warnsignal über den aktuellen Ladezustand der Batterie 10 mitgeteilt. Bei diesem Warnsignal handelt es sich zum Beispiel um ein blinkendes Lichtsignal sowie um eine Anzeige auf einem Display der Anzeigeeinheit 12. Mithilfe dieser Anzeige wird der Benutzer des Kraftfahrzeugs 1 darauf hingewiesen, dass das Kraftfahrzeug 1 angehalten werden soll und eine mobile Notladevorrichtung 2 zum Laden der Batterie 10 des Kraftfahrzeugs 1 positioniert werden soll. Sobald der Benutzer des Kraftfahrzeugs 1 das Kraftfahrzeug 1 daraufhin abbremst und in den Stillstand bringt, wechselt das Kraftfahrzeug 1 in einen Notfallmodus, in dem bei einer Bewegung zumindest eines der Räder 9 des Kraftfahrzeugs 1 die Batterie 10 in einem Rekuperationsbetrieb aufgeladen werden kann.

Die Notladevorrichtung 2 weist eine Antriebsrolle 3, eine Lagerungsrolle 4, ein Gehäuse 5, ein Kraftstoffreservoir 6, einen Verbrennungsmotor 7 sowie ein Getriebe 8 auf. Die einzelnen Komponenten der Notladevorrichtung 2 sind in Fig. 1 nur schematisch skizziert und stellen nicht die tatsächliche Anordnung der einzelnen Komponenten der Notladevorrichtung 2 dar. Um mit dieser mobilen Notladevorrichtung 2 die Batterie 10 des Kraftfahrzeugs 1 in einem Rekuperationsbetrieb aufzuladen, muss die Notladevorrichtung 2 unterhalb eines der Räder 9 des Kraftfahrzeugs 1 vom Benutzer des Kraftfahrzeugs 1 positioniert werden. Hierfür muss das entsprechende Rad 9, in diesem Fall das rechte Hinterrad, zunächst angehoben werden.

Das Anheben des Kraftfahrzeugs 1 im Bereich des entsprechenden Rades 9 kann mithilfe verschiedener Anhebemethoden erfolgen. Der Fahrer kann zum Beispiel manuell mit einem Wagenheber das Kraftfahrzeug 1 in diesem Bereich anheben. Es ist auch möglich, dass er zunächst die Notladevorrichtung 2 in der Nähe des entsprechenden Rades 9 auf einem Untergrund 13 ablegt und dann das Kraftfahrzeug 1 manuell beziehungsweise in einem zumindest teilautonomen Fahrvorgang auf die Notladevorrichtung 2 fährt beziehungsweise fahren lässt. Alternativ dazu ist es möglich, dass das Kraftfahrzeug 1 über ein aktives Fahrwerksystem verfügt, dass das entsprechende Rad 9 soweit vom Untergrund 13 abhebt, dass in dem Zwischenraum zwischen dem Rad 9 und dem Untergrund 13 die Notladevorrichtung 2 platziert werden kann. Des Weiteren ist es möglich, dass in das Kraftfahrzeug 1 ein Wagenheber integriert ist, der beispielsweise an der Unterseite des Kraftfahrzeugs 1 befestigt ist und angesteuert durch eine entsprechende Steuereinheit des Kraftfahrzeugs 1 derart ausgefahren wird, dass das Kraftfahrzeug 1 im Bereich des entsprechenden Rades 9 ausreichend weit vom Untergrund 13 angehoben wird, damit von dem Nutzer des Kraftfahrzeugs 1 die Notladevorrichtung 2 unterhalb des entsprechenden Rades 9 positioniert werden kann.

Nach der Positionierung der Notladevorrichtung 2 befindet sich das entsprechende Rad 9 des Kraftfahrzeugs 1 oberhalb der Antriebsrolle 3 und der Lagerungsrolle 4. Von diesen beiden Rollen 3 und 4 wird das Rad 9 in einer bestimmten Position gehalten, sodass das Kraftfahrzeug 1 nicht von der Notladevorrichtung 2 wegbewegt wird, sobald der Verbrennungsmotor 7 gestartet wird. Die Antriebsrollen 3 und die Lagerungsrolle 4 sind an den Außenwänden des Gehäuses 5 drehbar angebracht. Die Antriebsrolle 3 ist hierbei mit ihren beiden Enden an einer vorgegebenen Stelle befestigt. Die Lagerungsrolle 4 kann an mehreren Positionen im Gehäuse 5 angeordnet werden, indem diese in verschiedenen Abständen parallel zur Antriebsrolle 3 an vorgegebenen Arretierungspunkten an dem Gehäuse 5 der Notladevorrichtung 2 befestigt wird. Hierdurch ist es möglich, dass der Abstand, in dem die beiden Rollen 3 und 4 der Notladevorrichtung 2 in dem Gehäuse 5 zueinander angeordnet sind, an einen Durchmesser der Räder 9 des Kraftfahrzeugs 1 angepasst werden kann. An der Innenseite des Gehäuses 5 befinden sich daher an zwei gegenüberliegenden Wänden des Gehäuses 5 entsprechende Arretierungspunkte, an denen die Lagerungsrolle 4 befestigt werden kann. Bei diesen Arretierungspunkten kann es sich beispielsweise um Aussparungen in den Wänden des Gehäuses 5 handeln, in die die Lagerungsrolle 4 mit dafür vorgesehenen Stiftvorsätzen an ihren Enden eingeklemmt werden kann. Durch diese anpassbare Anordnung der Lagerungsrolle 4 ist es somit möglich, dass mit ein und derselben Notladevorrichtung 2 unterschiedliche Kraftfahrzeuge 1 mit Rädern 9 mit unterschiedlichen Durchmessern im Fall eines Notfalls mit Energie für die Batterie 10 versorgt werden können.

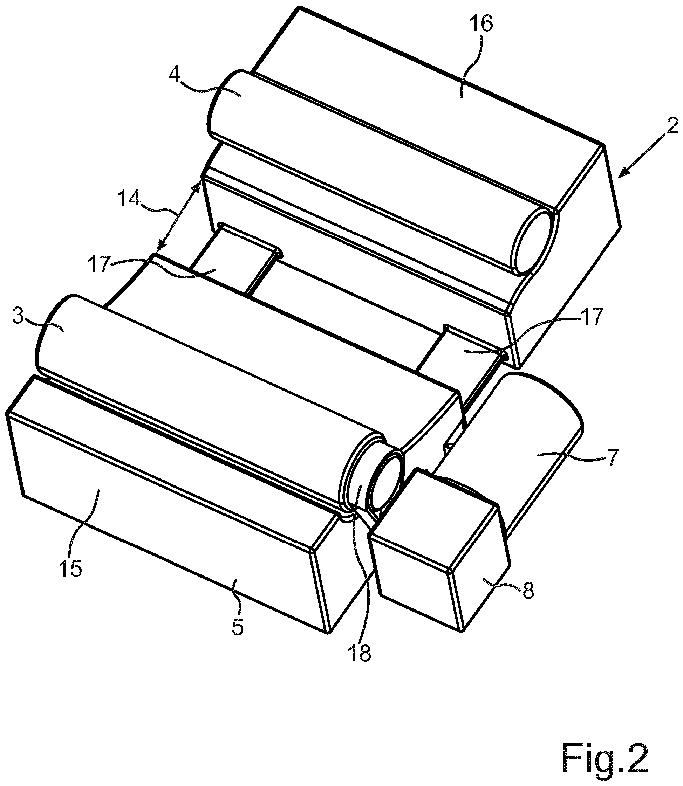

In Fig. 2 ist die Notladevorrichtung 2 mit einer alternativen Anordnung der beiden Rollen 3 und 4 skizziert. Die Antriebsrolle 3 und die Lagerungsrolle 4 sind bei dieser Anordnung an dem Gehäuseteil 15 beziehungsweise an dem Gehäuseteil 16 drehbar angelagert. Der Abstand zwischen den beiden Gehäuseteilen 15 und 16, gekennzeichnet mit einem doppelseitigen Pfeil 14, wird mithilfe von zwei Schienen 17 eingestellt. Diese Schienen 17 können derart auseinandergezogen beziehungsweise zusammengeschoben und dadurch in ihrer Länge verändert werden, dass vorbestimmte Abstände zwischen den beiden Gehäuseteilen 15 und 16 und somit zwischen den Rotationsachsen der beiden Rollen 3 und 4 eingestellt werden können. Durch diese anpassbare Anordnung der beiden Rollen 3 und 4 zueinander ist es ebenfalls möglich, dass mit ein und derselben Notladevorrichtung 2 unterschiedliche Kraftfahrzeuge 1 mit Rädern 9 mit unterschiedlichen Durchmessern im Fall eines Notfalls mit Energie für die Batterie 10 versorgt werden können.

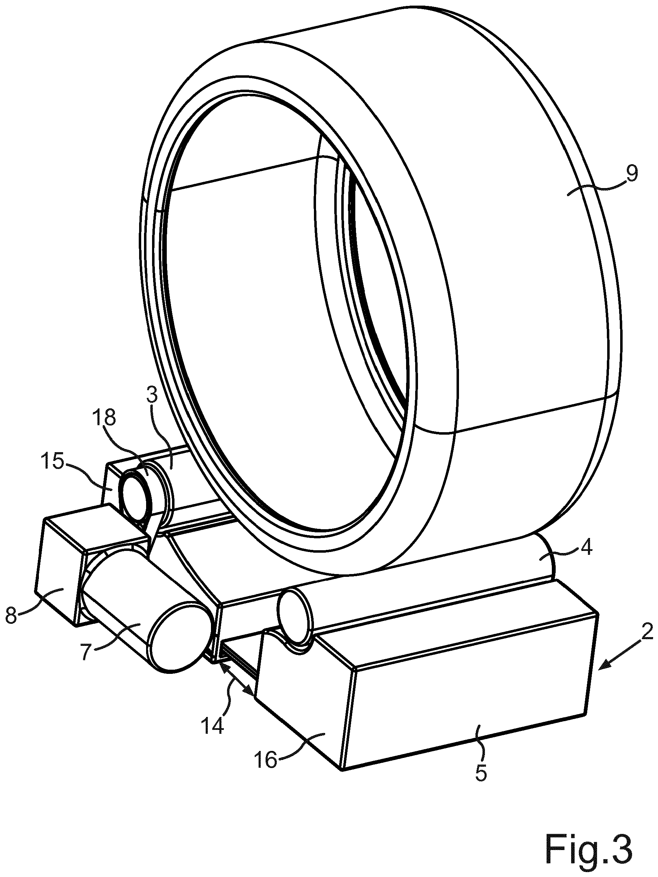

In Fig. 3 ist zur Verdeutlichung der Verwendung der in Fig. 2 skizzierten Notladevorrichtung 2 diese mit einem über der Notladevorrichtung 2 positionierten Rad 9 des Kraftfahrzeugs 1 skizziert.

Mithilfe des Kraftstoffreservoirs 6 (siehe Fig. 1) wird der Verbrennungsmotor 7 mit Kraftstoff versorgt, beispielsweise mit Benzin oder Ethanol. Sobald der Verbrennungsmotor 7 angeschaltet wird, wird dessen Bewegung mithilfe einer Ausgangswelle und dem Getriebe 8 an die Antriebsrolle 3 weitergegeben. Bei laufendem Verbrennungsmotor 7 wird also die Antriebsrolle 3 der Notladevorrichtung 2 in eine Drehbewegung versetzt. Mit dieser Drehbewegung wird das entsprechende Rad 9 des Kraftfahrzeugs 1 ebenfalls in eine Drehbewegung versetzt. Aufgrund der Drehbewegung des Rades 9 wird daraufhin auch die Lagerungsrolle 4 in eine Drehbewegung versetzt. Die Rotationsbewegung des Rades 9 des Kraftfahrzeugs 1 kann letztendlich dafür verwendet werden, dass die Batterie 10 des Kraftfahrzeugs 1 im Rekuperationsbetrieb des Kraftfahrzeugs 1 aufgeladen wird.

Ist die Notladevorrichtung 2 beispielsweise mit einem Kraftstoffreservoir 6 von ein bis zwei Litern Benzin ausgestattet, kann in einem Zeitraum von üblicherweise 30 Minuten mithilfe der mobilen Notladevorrichtung 2 die Batterie 10 des Kraftfahrzeugs 1 soweit wieder aufgeladen werden, dass sich das Kraftfahrzeug 1 weitere 30 bis 50 Kilometer fortbewegen kann. Die Notladevorrichtung 2 ermöglicht somit, dass das Kraftfahrzeug 1 selbständig zu einer sich in der Nähe befindenden Ladestation beziehungsweise im Falle eines Hybridfahrzeugs bis zur nächstliegenden Tankstelle fortbewegen kann.

Mithilfe des Getriebes 8 ist eine besonders vorteilhafte Umsetzung der Motorbewegung, das heißt der Bewegung des Verbrennungsmotors 7, zur Bewegung der Antriebsrolle 3 und somit zur Bewegung des entsprechenden Rades 9 des Kraftfahrzeugs 1 möglich. Wird beispielsweise der Verbrennungsmotor 7, bei dem es sich um einen Zweitaktmotor handelt, derart betrieben, dass dieser etwa 5000 bis 8000 Umdrehungen pro Minute durchführt, kann mithilfe des Getriebes mit einer bis üblicherweise sechs Getriebestufen diese Drehbewegung in eine Drehbewegung des Rades 9 von zwei bis drei Umdrehungen pro Sekunde übersetzt werden. In diesem Drehzahlenbereich ist ein besonders vorteilhaftes Aufladen der Batterie 10 im Rekuperationsbetrieb des Kraftfahrzeugs 1 möglich.

In der in Fig. 2 und Fig. 3. skizzierten Notladevorrichtung 2 erfolgt die Übersetzung der Drehbewegung des Verbrennungsmotors 7 zur Antriebsrolle 3 über das Getriebe 8 sowie über ein zusätzliches Riemengetriebe 18. Das Riemengetriebe 18 ermöglicht eine besonders leichte Wartung der Notladevorrichtung, da keine Schmierung nötig ist, und zeichnet sich unter anderem durch eine kurzzeitige Überlastungsfähigkeit aus. Das Verwenden des Riemengetriebes 18 ermöglicht also eine besonders vorteilhafte Übersetzung der Drehbewegung innerhalb der Notladevorrichtung 2.

Alternativ zu den hier skizzierten Notladevorrichtungen 2 können sowohl das Kraftstoffreservoir 6 als auch der Verbrennungsmotor 7 und das Getriebe 8 auch in die Antriebsrolle 3 integriert sein. Zum Beispiel können diese in einem Hohlraum im Inneren der Antriebsrolle 3 angeordnet und an einer Wand des Gehäuses 5 befestigt sein. Zudem kann die Batteriesteuereinheit 11 je nach Ausgestaltung des Kraftfahrzeugs 1 ein Bestandteil der Batterie 10 sein. Es ist jedoch auch möglich, dass es sich bei der Batteriesteuereinheit 11 um eine allgemeine und somit auch für andere Anwendungen verwendbare Steuereinheit des Kraftfahrzeugs 1 handelt.

Die Notladevorrichtung 2 ist von ihren Abmaßen her so konzipiert, dass sie zusammen mit einem Ersatzrad des Kraftfahrzeugs 1 in der Reserveradmulde des Kraftfahrzeugs 1, beispielsweise im Bereich des Kofferraums, verstaut werden kann. Dadurch ist es möglich, dass die mobile Notladevorrichtung 2 bei jeder Fahrt des Kraftfahrzeugs 1 mitgeführt wird und in einem entsprechenden Notfall, das heißt bei einem Batteriezustand, bei dem die Batterie 10 nicht vollkommen entladen ist aber dennoch nur noch die Kapazität dafür hat, einen relativ kleinen Restreichweitebereich abzudecken, verwendet werden kann. Die Notladevorrichtung 2 ist außerdem mit einem austauschbaren Kraftstoffreservoir 6 ausgestattet, sodass diese nach einem einmaligen Verwenden wiederverwendet werden kann, nachdem das Kraftstoffreservoir 6 ausgetauscht oder wieder aufgefüllt wurde. Bei der Notladevorrichtung 2 kann es sich jedoch auch um eine Vorrichtung handeln, die nur einmal verwendet werden kann. In diesem Fall kann das Kraftstoffreservoir 6 nicht ausgetauscht werden, weshalb die Notladevorrichtung 2 nach einem einmaligen Gebrauch beziehungsweise nachdem das Kraftstoffreservoir 6 aufgebraucht wurde, nicht mehr verwendbar ist.

Insgesamt zeigen die Beispiele, dass mit der Notladevorrichtung 2 die Batterie 10 eines Kraftfahrzeugs 1 unter Verwendung des Rekuperationsbetriebs des Kraftfahrzeugs 1 aufgeladen werden kann. Hierfür wird ausgenutzt, dass mit der Antriebsrolle 3 der Notladevorrichtung 2 eines der Räder 9 des Kraftfahrzeugs 1 in eine Drehbewegung versetzt wird und die dabei entstehende kinetische Energie in elektrische Energie umgewandelt werden kann, wodurch die Batterie 10 aufgeladen wird. Durch den vergleichsweise hohen Energiegehalt von flüssigen Brennstoffen wie zum Beispiel Ethanol oder Benzin, kommt es trotz Reibungsverlusten und einem Wirkungsgrad der elektrischen Antriebe kleiner 1 zu einer ausreichenden Energieübertragung im Rahmen des Betriebes der Notladevorrichtung 2. Die Restreichweite des Kraftfahrzeugs 1 kann daher mithilfe der mobilen Notladevorrichtung 2 ausreichend vergrößert werden, sodass das Kraftfahrzeug 1, nachdem es mit der Notladevorrichtung 2 aufgeladen wurde, bis zu einer in der Nähe liegenden Ladestelle gefahren werden kann.

## Patentansprüche

1. Mobile Notladevorrichtung (2) für eine Batterie (10) eines Kraftfahrzeugs (1), welche dazu ausgelegt ist, die Batterie (10) in einem Rekuperationsbetrieb aufzuladen, wobei
- die mobile Notladevorrichtung (2) zumindest ein Kraftstoffreservoir (6), einen Verbrennungsmotor (7) sowie wenigstens eine Antriebsrolle (3) zum Antreiben eines Rades (9) des Kraftfahrzeugs (1) aufweist,
- die wenigstens eine Antriebsrolle (3) zumindest mittelbar mit einer Ausgangswelle des Verbrennungsmotors (7) verbunden ist und über diese Verbindung bei laufendem Verbrennungsmotor (7) in eine Rotationsbewegung versetzt wird,
- die Antriebsrolle (3) derart unterhalb von einem der Räder (9) des Kraftfahrzeugs (1) positionierbar ist, dass mittels der rotierenden Antriebsrolle (3) bei laufendem Verbrennungsmotor (7) der mobilen Notladevorrichtung (2) das betreffende Rad (9) in eine Drehbewegung versetzt und dadurch die Batterie (10) im Rekuperationsbetrieb des Kraftfahrzeugs (1) aufgeladen wird,
- die mobile Notladevorrichtung (2) eine drehbar gelagerte Lagerungsrolle (4) aufweist, wobei jeweilige Rotationsachsen der Lagerungsrolle (4) und der Antriebsrolle (3) parallel zueinander verlaufen, sodass das betreffende Rad (9) des Kraftfahrzeugs (1) im Rekuperationsbetrieb teilweise zwischen der Antriebsrolle (3) und der Lagerungsrolle (4) angeordnet an diesen abrollt,
**dadurch gekennzeichnet, dass**
- der Verbrennungsmotor (7) und das Kraftstoffreservoir (6) in die Antriebsrolle (3) integriert sind.

2. Mobile Notladevorrichtung (2) nach Anspruch 1,
**dadurch gekennzeichnet, dass**
ein Abstand zwischen den Rotationsachsen für unterschiedliche Raddurchmesser veränderbar ist.

3. Mobile Notladevorrichtung (2) nach Anspruch 1 oder 2,
**dadurch gekennzeichnet, dass**
das Kraftstoffreservoir (6) austauschbar ist.

4. Mobile Notladevorrichtung (2) nach einem der vorhergehenden Ansprüche,
**dadurch gekennzeichnet, dass**
zwischen der Antriebsrolle (3) und der Ausgangswelle des Verbrennungsmotors (7) ein Getriebe (8) zwischengeschaltet ist.

5. Notladeverfahren für eine Batterie (10) eines Kraftfahrzeugs (1) mittels einer mobilen Notladevorrichtung (2) nach einem der vorhergehenden Ansprüche, bei welchem eine Antriebsrolle (3) der mobilen Notladevorrichtung (2) unterhalb von einem der Räder (9) des Kraftfahrzeugs (1) positioniert, bei laufendem Verbrennungsmotor (7) der mobilen Notladevorrichtung (2) mittels der rotierenden Antriebsrolle (3) das betreffende Rad (9) in eine Drehbewegung versetzt und dadurch die Batterie (10) im Rekuperationsbetrieb des Kraftfahrzeugs (1) aufgeladen wird.

6. Notladeverfahren nach Anspruch 5,
**dadurch gekennzeichnet, dass**
eine Steuereinheit (11) des Kraftfahrzeugs (1), wenn ein Ladezustand der Batterie (10) eine untere Ladegrenze unterschritten hat, einen Benutzer des Kraftfahrzeugs (1) mit einem vorbestimmten Warnsignal dazu auffordert, die mobile Notladevorrichtung (2) zu positionieren.

7. Notladeverfahren nach einem der Ansprüche 5 oder 6,
**dadurch gekennzeichnet, dass**
ein aktives Fahrwerksystem des Kraftfahrzeugs (1) das betreffende Rad (9) so weit anhebt, dass die mobile Notladevorrichtung (2) unter dem Rad (9) positionierbar ist, wobei das aktive Fahrwerksystem nach der Positionierung der mobilen Notladevorrichtung (2) das betreffende Rad (9) auf die Antriebsrolle (3) der mobilen Notladevorrichtung (2) absenkt.

## Claims

1. Mobile emergency charging device (2) for a battery (10) of a motor vehicle (1), which is designed to charge the battery (10) in a recovery mode,
wherein
- the mobile emergency charging device (2) has at least a fuel reservoir (6), an internal combustion engine (7) as well as at least one drive roller (3) for driving a wheel (9) of the motor vehicle (1),
- the at least one drive roller (3) is connected at least indirectly to an output shaft of the internal combustion engine (7) and is set in a rotational movement via this connection, with the internal combustion engine (7) running,
- the drive roller (3) can be positioned beneath one of the wheels (9) of the motor vehicle (1) such that, by means of the rotating drive roller (3), with the internal combustion engine (7) running, the mobile emergency charging device (2) sets the relevant wheel (9) in a rotational movement and, thus, the battery (10) is charged in recovery mode of the motor vehicle (1),
- the mobile emergency charging device (2) has a rotatably mounted bearing roller (4), wherein each of the rotation axes of the bearing roller (4) and the drive roller (3) extend parallel to one other, such that the relevant wheel (9) of the motor vehicle (1) is arranged and partially rolls, in recovery mode, between the drive roller (3) and the bearing roller (4),
**characterized in that**,
- the internal combustion engine (7) and the fuel reservoir (6) are integrated into the drive roller (3).

2. Mobile emergency charging device (2) according to claim 1,
**characterised in that**
a distance between the rotation axes can be changed for different wheel diameters.

3. Mobile emergency charging device (2) according claim 1 or 2,
**characterised in that**
the fuel reservoir (6) is replaceable.

4. Mobile emergency charging device (2) according to any of the preceding claims,
**characterised in that**
a transmission (8) is interconnected between the drive roller (3) and the output shaft of the internal combustion engine (7).

5. Emergency charging method for a battery (10) of a motor vehicle (1) by means of a mobile emergency charging device (2) according to any of the preceding claims, in which a drive roller (3) of the mobile emergency charging device (2) is positioned beneath one of the wheels (9) of the motor vehicle (1), with the internal combustion engine (7) running, the mobile emergency charging device (2) sets the relevant wheel (9) in a rotational movement by means of the rotating drive roller (3) and, thus, the battery (10) is charged in recovery mode of the motor vehicle (1).

6. Emergency charging method according to claim 5,
**characterised in that**,
when a charge status of the battery (10) has fallen below a lower charge limit, a control unit (11) of the motor vehicle (1) prompts a user of the motor vehicle (1), by means of a predetermined warning signal, to position the mobile emergency charging device (2).

7. Emergency charging method according to any of claims 5 or 6,
**characterised in that**
an active chassis system of the motor vehicle (1) raises the relevant wheel (9) sufficiently for the mobile emergency charging device (2) to be positioned beneath the wheel (9), wherein, after positioning of the mobile emergency charging device (2), the active chassis system lowers the relevant wheel (9) onto the drive roller (3) of the mobile emergency charging device (2).

## Revendications

1. Dispositif mobile de charge d'urgence (2) pour une batterie (10) d'un véhicule automobile (1) qui est conçu pour charger la batterie (10) lors d'un fonctionnement de récupération,
dans lequel
- le dispositif mobile de charge d'urgence (2) présente au moins un réservoir de carburant (6), un moteur à combustion (7) ainsi qu'au moins un galet d'entraînement (3) pour l'entraînement d'une roue (9) du véhicule automobile (1),
- l'au moins un galet d'entraînement (3) est relié au moins directement à un arbre de sortie du moteur à combustion (7) et via cette liaison est mis dans un mouvement de rotation lorsque le moteur à combustion (7) tourne,
- le galet d'entraînement (3) est positionnable en dessous d'une des roues (9) du véhicule automobile (1) de telle sorte que, au moyen du galet d'entraînement (3) en rotation lorsque le moteur à combustion (7) du dispositif mobile de charge d'urgence (2) tourne, la roue (9) concernée est mise dans un mouvement de rotation et de ce fait la batterie (10) est chargée lors du fonctionnement de récupération du véhicule automobile (1),
- le dispositif mobile de charge d'urgence (2) présente un galet de stockage (4) monté de manière rotative, dans lequel des axes de rotation respectifs du galet de stockage (4) et du galet d'entraînement (3) sont parallèles entre eux, de sorte que la roue (9) concernée du véhicule automobile (1) est disposée lors du fonctionnement de récupération partiellement entre le galet d'entraînement (3) et le galet de stockage (4) et roule au niveau de celui-ci,
**caractérisé en ce que**
- le moteur à combustion (7) et le réservoir de carburant (6) sont intégrés dans le galet d'entraînement (3).

2. Dispositif mobile de charge d'urgence (2) selon la revendication 1,
**caractérisé en ce que**
une distance entre les axes de rotation est modifiable pour différents diamètres de roue.

3. Dispositif mobile de charge d'urgence (2) selon la revendication 1 ou 2,
**caractérisé en ce que**
le réservoir de carburant (6) est remplaçable.

4. Dispositif mobile de charge d'urgence (2) selon l'une quelconque des revendications précédentes,
**caractérisé en ce que**
entre le galet d'entraînement (3) et l'arbre de sortie du moteur à combustion (7) une transmission (8) est intercalée.

5. Procédé de charge d'urgence pour une batterie (10) d'un véhicule automobile (1) au moyen d'un dispositif mobile de charge d'urgence (2) selon l'une quelconque des revendications précédentes, dans lequel un galet d'entraînement (3) du dispositif mobile de charge d'urgence (2) est positionné en dessous d'une des roues (9) du véhicule automobile (1), lorsque le moteur à combustion (7) du dispositif mobile de charge d'urgence (2) tourne au moyen du galet d'entraînement (3) en rotation la roue (9) concernée est mise dans un mouvement de rotation et de ce fait la batterie (10) est chargée lors d'un fonctionnement de récupération du véhicule automobile (1).

6. Procédé de charge d'urgence selon la revendication 5,
**caractérisé en ce que**
une unité de commande (11) du véhicule automobile (1), lorsqu'un état de charge de la batterie (10) est inférieur à une limite de charge inférieure, invite avec un signal d'avertissement prédéterminé un utilisateur du véhicule automobile (1) à positionner le dispositif mobile de charge d'urgence (2).

7. Procédé de charge d'urgence selon l'une quelconque des revendications 5 ou 6,
**caractérisé en ce que**
un système de châssis actif du véhicule automobile (1) soulève la roue (9) concernée de sorte que le dispositif mobile de charge d'urgence (2) est positionnable sous la roue (9), dans lequel le système de châssis actif après le positionnement du dispositif mobile de charge d'urgence (2) abaisse la roue (9) concernée sur le galet d'entraînement (3) du dispositif mobile de charge d'urgence (2).
